# FASCICULE DE BREVET EUROPEEN

(11) **EP 0 398 074 B1**
(45) Date de publication et mention de la délivrance du brevet: **01.02.1995**
(21) Numéro de dépôt: 90108303.0
(22) Date de dépôt: 02.05.1990
(51) Int. Cl.: G01K 1/14

(54) **Dispositif de mesure en continu de la température d'un métal fondu**
Vorrichtung für die kontinuierliche Messung eines geschmolzenen Metalls
Device for the continuous measurement of molten metal temperature

(30) Priorité: 17.05.1989 LU 87522
(43) Date de publication de la demande: 22.11.1990
(73) Titulaire: ARBED S.A., L-2930 Luxembourg (LU)
(72) Inventeur: Fernand, Thill, L-4174 Esch/Alzette (LU); Schoumacher, Carlo, L-4505 Niedercorn (LU)
(74) Mandataire: Freylinger, Ernest T.

(56) Documents cités:
- LU-A- 83 756
- US-A- 3 610 045
- PATENT ABSTRACTS OF JAPAN, vol. 6, no. 192 (P-145), 30 septembre 1982;& JP-A-57 101 730
- PATENT ABSTRACTS OF JAPAN, vol. 11, no. 223 (P-597), 21 juillet 1987;& JP-A-62 039 733

## Description

La présente invention concerne un dispositif qui permet la mesure en continu de la température élevée d'un bain liquide, notamment d'un bain d'acier ou de fonte contenu dans un récipient utilisé couramment en sidérurgie, tel qu'une poche, un convertisseur, un répartiteur de coulée continue.

Au cours d'un procédé métallurgique, tel que par exemple un procédé d'affinage, il est important pour l'opérateur de connaître à tout moment la température exacte du bain métallique, puisque la température est une des données principales dont il a besoin pour tirer des conclusions sur l'évolution correcte du procédé en question. La connaissance de cette température de façon continue est de nos jours de plus en plus indispensable puisqu'elle constitue une donnée importante des programmes d'ordinateurs permettant un contrôle permanent du processus. L'exploitation des spécifications techniques lui fournies par ces programmes permettent à l'opérateur d'intervenir à temps et à tout moment sur le processus d'élaboration ou de traitement en question. Il en est de même pour des opérations entrant dans une phase critique, généralement vers la fin du processus où la température du bain métallique risque de descendre en dessous d'une valeur mininale. Tel est, par exemple, le cas dans un répartiteur de coulée continue où la coulabilité du bain d'acier n'est garantie qu'au dessus d'une certaine température. La qualité du produit semi-fini ou fini peut dans certains cas dépendre également de la constance de la température de l'acier ou de la fonte coulée.

Il existe actuellement plusieurs systèmes qui permettent la mesure de la température d'un bain liquide métallique. Un système très répandu utilise une lance rétractable munie d'un capteur qui est introduit de façon intermittante dans le bain. Le désavantage principal de ce système réside dans le fait qu'il ne permet pas de mesurer la température de façon continue sur la durée totale d'un processus d'élaboration ou de traitement normalement par suite de la consommation de la lance et/ou du capteur. En plus, dans la plupart des cas, l'introduction de la lance gène le déroulement normal d'un procédé et ne peut généralement se faire que lors d'un arrêt du processus d'élaboration ou de traitement.

Un autre système connu de US-A-3 610 045 prévoit l'incorporation dans le réfractaire d'un récipient métallurgique d'une gaine creuse réfractaire qui peut recevoir la sonde d'un thermocouple. Bien que ce système permet la mesure en continu de la température du bain métallique, l'inconvénient majeur de ce système réside dans le fait que les gaines de protection réfractaires généralement utilisées s'usent quand même et se détériorent rapidement, notamment au contact de la scorie, et que de ce fait on ne peut effectuer qu'un nombre très limité de mesures avant le remplacement des gaines. Les mesures de température peuvent en plus être faussées à la suite de l'usure des gaines et par un ajustement imprécis du capteur dans la gaine.

Le but de la présente invention est de concevoir un dispositif de mesure de la température d'un métal fondu qui ne présente pas les inconvénients des systèmes connus et qui permet une mesure correcte et en continu du bain métallurgique sans perturber le processus en cours. Le dispositif de mesure selon l'inventeur devra être conçu de telle façon que le risque de son endommagement par le bain métallique où la scorie est faible et que son remplacement ne devra se faire qu'à des intervalles de temps assez longs, par exemple, lors du remplacement du revêtement réfractaire du récipient métallurgique.

Ce but est atteint par le dispositif de mesure selon l'invention tel qu'il est caractérisé dans la revendication principale. Des variantes d'exécution préférentielles sont décrites dans les revendications dépendantes.

Un avantage substantiel réalisé par le dispositif de mesure selon l'invention est qu'il est très fiable, qu'il est relativement peu onéreux et qu'il se laisse facilement remplacer, tout en permettant la récupération d'au moins une partie des éléments qui le composent.

D'autres avantages et caractéristiques de l'invention apparaîtront par la description des dessins qui représentent une forme d'exécution préférée du dispositif de mesure selon l'invention et dans lesquels :
- la figure 1 représente une coupe longitudinale à travers un dispositif de mesure selon l'invention tel qu'installé dans la paroi d'un récipient métallurgique; et
- la figure 2 montre, en coupe, une poche métallurgique comprenant plusieurs dispositifs de mesure selon l'invention.

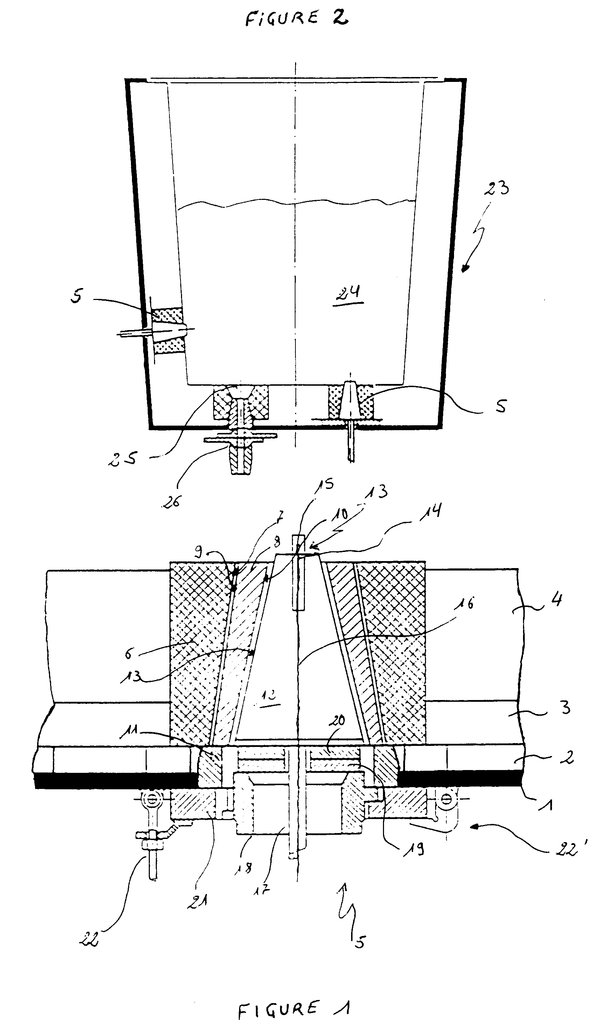

Dans la figure 1 on distingue la paroi extérieure (1) en tôle d'acier d'un récipient métallurgique revêtue de plusieurs couches de réfractaires, dont les couches en briques réfractaires de sécurité (2) et (3) et la couche (4) en briques réfractaires d'usure. Ces couches peuvent, selon les besoins, être réalisées en des réfractaires présentant des conductibilités thermiques différentes. Le dispositif de mesure de température (5) selon l'invention est logé dans une brique de siège (6) formée de préférence d'un bloc réfractaire creux présentant une surface intérieure (7) en forme tronconique. A l'intérieur de la brique de siège (6) est aménagée une douille (8) en un matériau réfractaire à conductibilité thermique inférieure à celle de la brique de siège (6). La face extérieure (9) de la douille (8) épouse la forme de la face intérieure (7) de la brique de siège (6), tandis que la surface intérieure (10) de la douille (8) épouse une forme tronconique dont l'arête a un angle légèrement supérieur à celui de sa surface extérieure (9). La douille (8) est retenue en place par un ciment et un anneau en acier (11).

Le dispositif de mesure de température (5) propre est, dans la forme d'exécution montrée à la figure 1, composé d'un corps (12) en forme de tronc de cône dont la face extérieure (13) épouse la forme de la face intérieure (10) de la douille (8). Le corps (12) abrite à l'endroit de sa petite base une sonde (13) qui comprend une cartouche cylindrique (14) à nez fermé en matière céramique et un capteur (15) de mesure de la température. Tel que montré dans la figure 1, la capteur (15) est intimement lié à la matière céramique de la cartouche (14) afin d'assurer par un bon contact une bonne transmission de la chaleur. La cartouche cylindrique (14) est installée dans le tronc de cône (12) de façon à ce que son axe coïncide avec celle du tronc de cône et qu'une de ses extrémités fait légèrement saillie par rapport à la petite base du corps tronconique (12) plongeant ainsi son nez fermé dans la masse liquide.

Selon le mode préféré de l'invention, la cartouche céramique (14) est fabriquée en nitrure de bore qui est un des rares matériaux qui possèdent une très bonne conductibilité thermique en même temps qu'une résistivité électrique élevée. Ces caractéristiques permettent d'incorporer un capteur, tel que la soudure chaude d'un thermocouple, directement dans la gaine en contact continu avec le nitrure de bore sans protection diélectrique supplémentaire. La nitrure de bore a, par ailleurs, les propriétés d'être pratiquement insensible aux chocs thermiques, de présenter une bonne résistance à l'oxydation et de ne pas avoir de mouillabilité par l'acier et la scorie. Toutes ces propriétés font que la gaine de protection est durable et fiable. En plus, le nitrure de bore se laisse travailler à façon moyennant des outils traditionnels.

Si dans l'exemple montré à la figure 1 on a choisi comme capteur de mesure de la température un thermocouple, il est possible de choisir d'autres moyens pour réaliser une mesure correcte et en continu de la température. Ainsi un autre mode d'exécution prévoit d'utiliser la cartouche (14), en forme de cylindre creux fermé d'un côté, comme cavité d'un "corps noir" et de procéder à la mesure de la température par des moyens de photodétection et de phototransmission (fibres optiques).

Dans la figure 1 le capteur (15) est relié par des moyens (16) traversant le corps tronconique (12) via un tube de raccordement (17) à des instruments de mesures situés à distance du récipient métallurgique.

La forme du corps (12) a été intentionellement choisie de façon à pouvoir le monter et le démonter facilement et ainsi l'échanger rapidement. Le corps (12) est tenu en place par un sertissage (18) en métal qui comprend un mécanisme de fermeture à baïonnette qui serre le corps (12) contre la douille (8) moyennant deux anneaux réfractaires (19) et (20) dont au moins un est constitué d'un matériau réfractaire compressible. Un anneau (21) en acier s'appuie contre le sertissage (18) et est fixé de façon aisément démontable à la paroi (1) en tôle du récipient métallurgique à l'aide d'un mécanisme de support et de fixation 22 et 22′. En cas de nécessité, un circuit de refroidissement à l'eau peut être aménagé aussi bien dans le sertissage (18) que dans l'anneau en acier (21).

Selon un autre mode d'exécution la cartouche (14) comprenant le capteur (15) de mesure de la température peut être elle-même logée dans une gaine de nitrure de bore, ce qui permet de l'échanger rapidement en cas d'endommagement mécanique avant même la remise à neuf du revêtement réfractaire du récipient métallurgique. Cette forme d'exécution permet également le retrait ou le déplacement de la cartouche (14) s'il y a risque d'endommagement, par exemple, lors du chargement de produits d'enfournement surtout solides dans le récipient métallurgique.

La figure 2 montre une poche (23) qui contient un bain liquide d'acier (24). Une ouverture de coulée (25), fermée par un tiroir de coulée (26), est aménagée dans le fond de la poche (23). Dans la figure 2 on montre deux dispositifs de mesure de la température (5), tels qu'illustrés dans la figure 1, qui sont installés dans la poche (23), l'un au fond et l'autre dans une paroi latérale. L'aménagement de deux ou plusieurs dispositifs de mesure selon l'invention à différents endroits d'un récipient améliore la représentativité de la mesure. Il est entendu que le ou les dispositifs de mesure peuvent être connectés, via un interface, à un ordinateur qui contrôle le processus d'élaboration et/ou de traitement de l'acier ou de la fonte dans le récipient métallurgique

## Revendications

1. Dispositif de mesure en continu de la température d'un métal en fusion (24) dans un récipient métallurgique, comprenant
un corps en matière réfractaire (12),
des moyens de montage et de fixation dudit corps en matière réfractaire (12) dans une paroi du récipient métallurgique, une première extrémité au moins dudit corps (12) étant exposée au métal en fusion,
un capteur (15) de températures monté dans le corps en matière réfractaire (12), ledit capteur (15) étant muni de moyens de transmission (16, 17) traversant ledit corps en matière réfractaire (12) pour relier le capteur (15) à un instrument de mesure, **caractérisé**
en ce que le capteur (15) est incorporé dans une cartouche (14) à nez fermé, réalisée en une matière céramique à conductibilité thermique et à résistivité élevées, en contact direct avec la cartouche (14), et
en ce que cette cartouche (14) est intégrée dans ledit corps en matière réfractaire (12) son nez fermé dépassant légèrement ladite première extrémité du corps en matière réfractaire (12).

2. Dispositif selon la revendication 1, caractérisé en ce que la cartouche (14) est réalisée en nitrure de bore.

3. Dispositif selon la revendication 1 ou 2, caractérisé en ce que la soudure chaude d'un thermocouple (15) est intimement liée à la matière céramique de la cartouche (14).

4. Dispositif selon l'une quelconque des revendications 1 à 3, caractérisée en ce que la cartouche (14) est logée dans une gaine en nitrure de bore permettant son retrait à l'intérieur du corps en matière réfractaire (12) et/ou son remplacement.

5. Dispositif selon l'une quelconque des revendications 1 à 4, caractérisé
en ce que le corps en matière réfractaire (12) a la forme d'un tronc de cône et est serti dans un logement tronconique (13) d'une douille (8) en matière réfractaire,
en ce que cette douille (8) est montée à l'aide d'un ciment réfractaire dans une brique de siège (6) qui est intégrée dans le revêtement réfractaire (3, 4) du récipient métallurgique, et
en ce que la douille (8) est constituée d'une matière réfractaire à conductibilité thermique inférieure à celle de la brique de siège (6).

6. Dispositif selon l'une quelconque des revendications 1 à 5, caractérisé
en ce que le corps en matière réfractaire (12) a la forme d'un tronc de cône et est serti dans un logement tronconique (13), et
en ce qu'un premier dispositif métallique de sertissage (18) s'appuie sur le corps en matière réfractaire (12) pour le tenir en place dans son logement (13), ce premier dispositif de sertissage (18) étant fixé de façon aisément démontable à une paroi en tôle (1) du récipient métallurgique.

7. Dispositif selon la revendication 6, caractérisé en ce que entre ledit premier dispositif métallique de sertissage (18) et le corps en matière réfractaire (12) est interposé au moins un anneau (19, 20) constitué d'une matière réfractaire compressible.

8. Dispositif selon la revendication 7, caractérisé en ce que ledit premier dispositif métallique de sertissage (18) comprend un mécanisme à baïonnette pour sertir le corps en matière réfractaire (12) dans son logement tronconique (13) et un anneau de fixation (21) pour fixer le dispositif de sertissage (18) métallique de façon aisément démontable à la paroi en tôle (1) du récipient métallurgique.

9. Dispositif selon la revendication 8, caractérisé
en ce que le corps en matière réfractaire (12) est monté dans une douille (8) tronconique en matière réfractaire qui est montée dans un logement tronconique (7) d'une pierre de siège (6) laquelle est intégrée dans le revêtement réfractaire (3, 4) du récipient métallurgique, et
en ce qu'un deuxième anneau métallique (11) s'appuie sur la douille (8) en matière réfractaire pour la tenir en place dans son logement (7).

10. Dispositif suivant l'une quelconque des revendications 1 à 9, caractérisé en ce que la cartouche (14) comprend une cavité conçue pour un "corps noir" d'un capteur de température de rayonnement.

## Claims

1. Device for the continuous measurement of the temperature of a molten metal (24) in a metallurgical vessel, comprising
a body made of a refractory material (12),
means for mounting and fixing the said refractory body (12) in a wall of the metallurgical vessel, at least a first end of the said body (12) being exposed to the molten metal,
a temperature sensor (15) mounted in the refractory body (12), the said sensor (15) being equipped with means of transmission (16, 17) passing through the said refractory body (12) in order to connect the sensor (15) to a measuring instrument, characterised
in that the sensor (15) is incorporated in a cartridge (14), with closed tip, made of a ceramic material having a high thermal conductivity and a high resistivity, and is in direct contact with the cartridge (14), and
in that this cartridge (14) is integrated into the said refractory body (12), its closed tip slightly protruding from the said first end of the refractory body (12).

2. Device according to Claim 1, characterised in that the cartridge (14) is made of boron nitride.

3. Device according to Claim 1 or 2, characterised in that the hot junction of a thermocouple (15) is intimately connected to the ceramic material of the cartridge (14).

4. Device according to any one of Claims 1 to 3, characterised in that the cartridge (14) is seated in a boron nitride sheath allowing it to be withdrawn to the inside of the refractory body (12) and/or to be replaced.

5. Device according to any one of Claims 1 to 4, characterised
in that the refractory body (12) has the shape of a truncated cone and is seated in a tapered housing (13) of a bush (8) made of a refractory material,
in that this bush (8) is mounted with a refractory cement in a seating block (6) which is integrated into the refractory lining (3, 4) of the metallurgical vessel, and
in that this bush (8) is made of a refractory material with a thermal conductivity lower than that of the seating block (6).

6. Device according to any one of Claims 1 to 5, characterised
in that the refractory body (12) has the shape of a truncated cone and is seated in a tapered housing (13), and
in that a first metallic seating device (18) presses against the refractory body (12) in order to keep it in place in its housing (13), this first seating device (18) being fixed in an easily removable manner to a sheet-metal wall (1) of the metallurgical vessel.

7. Device according to Claim 6, characterised in that at least one ring (19, 20) made of a compressible refractory material is placed between the said first metallic seating device (18) and the refractory body (12).

8. Device according to Claim 7, characterised in that the said first metallic seating device (18) comprises a bayonet mechanism for seating the refractory body (12) in its tapered housing (13) and a ring fastener (21) for fixing the metallic seating device (18) in an easily removable manner to the sheet-metal wall (1) of the metallurgical vessel.

9. Device according to Claim 8, characterised
in that the refractory body (12) is mounted in a tapered bush (8) made of a refractory material which is mounted in a tapered housing (7) of a seating block (6) integrated into the refractory lining (3, 4) of the metallurgical vessel, and
in that a second metallic ring (11) presses against the refractory bush (8) in order to keep it in place in its housing (7).

10. Device according to any one of Claims 1 to 9, characterised in that the cartridge (14) includes a cavity intended to be the "black body" of a radiation pyrometer.

## Patentansprüche

1. Vorrichtung zur kontinuierlichen Messung der Temperatur eines schmelzflüssigen Metalls (24) in einem metallurgischen Behälter, umfassend
einen Körper (12) aus feuerfestem Material,
Mittel zur Anbringung und Befestigung des Körpers (12) aus feuerfestem Material in einer Wand des metallurgischen Behälters, wobei mindestens ein erstes Ende des Körpers (12) dem schmelzflüssigen Metall ausgesetzt ist,
einen Temperaturfühler (15), der in dem Körper (12) aus feuerfestem Material angebracht ist, wobei der Temperaturfühler (15) mit Übertragungsmitteln (16, 17) versehen ist, die durch den Körper (12) aus feuerfestem Material hindurchgeführt sind, um den Temperaturfühler (15) mit einem Meßinstrument zu verbinden, dadurch gekennzeichnet,
daß der Temperaturfühler (15) in eine mit einer geschlossenen Nase versehene Patrone (14) eingebaut ist, die aus einem keramischen Material mit hoher Wärmeleitfähigkeit und hohem spezifischem Widerstand verwirklicht ist, wobei der Temperaturfühler direkten Kontakt mit der Patrone (14) hat, und
daß diese Patrone (14) in den Körper (12) aus feuerfestem Material integriert ist, wobei seine geschlossene Nase über das erste Ende des Körpers (12) aus feuerfestem Material leicht hinausragt.

2. Vorrichtung gemäß Anspruch 1, dadurch gekennzeichnet, daß die Patrone (14) aus Bornitrid verwirklicht ist.

3. Vorrichtung gemäß Anspruch 1 oder 2, dadurch gekennzeichnet, daß die heiße Schweißstelle eines Thermoelements (15) mit dem keramischen Material der Patrone (14) eng verbunden ist.

4. Vorrichtung gemäß irgendeinem der Ansprüche 1 bis 3, dadurch gekennzeichnet, daß die Patrone (14) in einem Schutzrohr aus Bornitrid untergebracht ist, so daß sie innerhalb des Körpers (12) aus feuerfestem Material herausgezogen und/oder ersetzt werden kann.

5. Vorrichtung gemäß irgendeinem der Ansprüche 1 bis 4, dadurch gekennzeichnet,
daß der Körper (12) aus feuerfestem Material die Form eines Kegelstumpfes hat und in einen kegelstumpfförmigen Sitz (13) einer Hülse (8) aus feuerfestem Material eingesetzt ist,
daß diese Hülse (8) mit Hilfe eines feuerfesten Zements in einem Sitz-Ziegelstein (6) angebracht ist, der in die feuerfeste Auskleidung (3, 4) des metallurgischen Behälters integriert ist, und
daß die Hülse (8) aus einem feuerfesten Material mit einer niedrigeren Wärmeleitfähigkeit als der Sitz-Ziegelstein (6) besteht.

6. Vorrichtung gemäß irgendeinem der Ansprüche 1 bis 5, dadurch gekennzeichnet,
daß der Körper (12) aus feuerfestem Material die Form eines Kegelstumpfes hat und in einen kegelstumpfförmigen Sitz (13) eingesetzt ist, und
daß eine erste metallische Einsetzvorrichtung (18) auf dem Körper (12) aus feuerfestem Material aufliegt, um diesen Körper in seinem Sitz (13) festzuhalten, wobei diese erste Einsetzvorrichtung (18) an einer Blechwand (1) des metallurgischen Behälters leicht abmontierbar befestigt ist.

7. Vorrichtung gemäß Anspruch 6, dadurch gekennzeichnet, daß zwischen der ersten metallischen Einsetzvorrichtung (18) und dem Körper (12) aus feuerfestem Material mindestens ein Ring (19, 20) angeordnet ist, der aus einem zusammendrückbaren feuerfesten Material besteht.

8. Vorrichtung gemäß Anspruch 7, dadurch gekennzeichnet, daß die erste metallische Einsetzvorrichtung (18) einen Bajonettmechanismus aufweist, um den Körper (12) aus feuerfestem Material in seinen kegelstumpfförmigen Sitz (13) einzusetzen, und außerdem einen Befestigungsring (21) aufweist, um die metallische Einsetzvorrichtung (18) an der Blechwand (1) des metallurgischen Behälters leicht abnehmbar zu befestigen.

9. Vorrichtung gemäß Anspruch 8, dadurch gekennzeichnet,
daß der Körper (12) aus feuerfestem Material in einer kegelstumpfförmigen Hülse (8) aus feuerfestem Material angebracht ist, die in einem kegelstumpfförmigen Sitz (7) eines Sitzsteins (6) angebracht ist, der in die feuerfeste Auskleidung (3, 4) des metallurgischen Behälters integriert ist, und
daß ein zweiter metallischer Ring auf der Hülse (8) aus feuerfestem Material aufliegt, um diese Hülse in ihrem Sitz (7) festzuhalten.

10. Vorrichtung gemäß irgendeinem der Ansprüche 1 bis 9, dadurch gekennzeichnet, daß die Patrone (14) einen Hohlraum aufweist, der für einen "schwarzen Körper" eines Strahlungs-Temperaturfühlers ausgelegt ist.
